# EUROPÄISCHE PATENTANMELDUNG

(11) **EP 0 817 475 A1**
(43) Veröffentlichungstag der Anmeldung: **07.01.1998**
(21) Anmeldenummer: 97201771.9
(22) Anmeldetag: 11.06.1997
(51) Int. Cl.: H04N 5/222

(54) **Anordnung zur Produktion eines Fernsehbeitrages mit modularem Aufbau**

(30) Priorität: 28.06.1996 DE 19625953
(71) Anmelder: Philips Patentverwaltung GmbH, 22335 Hamburg (DE); Philips Electronics N.V., 5621 BA Eindhoven (NL)
(72) Erfinder: Fegesch, Henrik, Röntgenstrasse 24, 22335 Hamburg (DE)
(74) Vertreter: Erdmann, Anton, Dipl.-Ing.

(57) **Zusammenfassung**

Die Erfindung bezieht sich auf eine Anordnung zur Produktion eines Fernsehbeitrages in einem Studio oder einem Übertragungswagen mit mindestens einer Bildsignalquelle (19 bis 22), mit Einrichtungen (11 bis 17) zur Verarbeitung der Bildsignale und mit Ausgängen (23 bis 26) für die bearbeiteten Bildsignale. Um den Aufwand für den Aufbau, die Verdrahtung und für Umrüstungen zu vermindern, wird vorgeschlagen, daß die einzelnen Bildsignal-Verarbeitungseinrichtungen (11 bis 17) als selbständige Baueinheiten unabhängig voneinander in einer zentralen Operationseinheit (10) zusammengefaßt sind und daß die Ein- und Ausgänge der Bildsignal-Verarbeitungseinrichtungen (11 bis 17) mit einer steuerbaren Schalteinrichtung (18) verbunden sind, die eine freie Zuordnung der Bildsignal-Verarbeitungseinrichtungen (11 bis 17) ermöglicht.

## Beschreibung

Die Erfindung bezieht sich auf eine Anordnung zur Produktion eines Fernsehbeitrages in einem Studio oder einem Übertragungswagen
- mit mindestens einer Bildsignalquelle,
- mit Einrichtungen zur Verarbeitung der Bildsignale und
- mit Ausgängen für die bearbeiteten Bildsignale.

Zur Produktion eines Fernsehbeitrages stehen in der Regel mehrere Bildsignalquellen gleichzeitig zur Verfügung. Um aus der Vielzahl der Bildsignalquellen bestimmte Bildsignalquellen auszuwählen und Bildsignale nach künstlerischen Gesichtspunkten zu bearbeiten, sind in einem Fernsehstudio bzw. in einem Fernseh-Übertragungswagen verschiedene Einrichtungen zum Verarbeiten der Bildsignale vorgesehen, so z.B. Einrichtungen zum Umschalten, Mischen, Synchronisieren, Korrigieren, Verfremden und Speichern der Bildsignale. Die verschiedenen Bildsignalquellen und Bildsignal-Verarbeitungseinrichtungen sind bisher durch eine aufwendige Verkabelung miteinander verbunden. Bei den zur Verfügung stehenden Bildsignalquellen handelt es sich z.B. um Kameras, Magnetband-Aufzeichnungsgeräte, externe Eingänge oder sonstige Quellen. Die von den Bildsignal-Verarbeitungseinrichtungen bearbeiteten Bildsignale werden über Ausgänge z.B. zu Sendeleitungen, Monitoren oder sonstigen Verbraucher geleitet.

So ist z.B. ein betriebsfertig aufgebauter Fernseh-Übertragungswagen nach den Wünschen des Kunden aufgebaut und enthält z.B. die oben genannten Bildsignal-Verarbeitungseinrichtungen, die fest miteinander verdrahtet sind. Die verschiedenen Rundfunkstationen haben in der Regel jeweils gesonderte Wünsche, je nachdem, wofür ein derartiger Fernseh-Übertragungswagen überwiegend verwendet werden soll. Dies können z.B. Sportveranstaltungen, Lardschaftsaufnahmen, Musikveranstaltungen, Talk-Shows, politische Veranstaltungen oder dergl. sein. Je nach dem gewünschten Zweck sind dann bestimmte Kameras und Verarbeitungseinrichtungen vorgesehen, die nach dem Wunsch des Kunden eingebaut und fest oder lösbar miteinander verdrahtet sind. Wenn z.B. ein derartiger Übertragungswagen, der für Sportveranstaltungen konzipiert wurde, für einen anderen Zweck verwendet werden soll, so sind in der Regel kostspielige und aufwendige Umbauarbeiten erforderlich.

Durch die US-PS 47 00 230 ist ein modulares Video-Schaltsystem bekannt geworden. Hierbei handelt es sich um ein Kamera-Monitor-System mit mehreren Kameras und einem Monitor, wobei die Kameras über eine Box auf den Monitor geschaltet werden. Jedes der Module enthält eine begrenzte Anzahl von Eingangskanälen. Die Module können miteinander verschaltet werden, so daß die Video-Signale aller Module auf dem Monitor dargestellt werden. Eine Meßeinrichtung wertet die Kamerasignale aus.

Der Erfindung liegt die Aufgabe zugrunde, eine Anordnung der eingangs genannten Art derart zu gestalten, daß der Aufbau einfach und der Verdrahtungsaufwand möglichst gering ist und daß eine Umrüstung mit wenig Aufwand durchführbar ist.

Diese Aufgabe wird gemäß der Erfindung bei einer Anordnung der eingangs genannten Art dadurch gelöst,
- daß die einzelnen Bildsignal-Verarbeitungseinrichtungen als selbständige Baueinheiten unabhängig voneinander in einer zentralen Operationseinheit zusammengefaßt sind und
- daß Ein- und Ausgänge der Bildsignal-Verarbeitungseinrichtungen mit einer steuerbaren Schalteinrichtung verbunden sind, die eine freie Zuordnung der Bildsignal-Verarbeitungseinrichtungen ermöglicht.

Damit ergibt sich ein flexibles System zur Produktion von Fernsehbeiträgen, welches nicht durch eine feste, dezentrale Verkabelung eingeengt ist. Mit einer derartigen Anordnung können nunmehr die in einem Fernsehstudio oder einem Fernseh-Übertragungswagen vorhandenen Bildsignalquellen und Bildsignal-Verarbeitungseinrichtungen an die jeweiligen Bedürfnisse einer Produktion und/oder einer Bedienperson, z.B. eines Künstlers, leicht und problemlos angepaßt werden. Vorhandene und verfügbare Bildsignal-Verarbeitungseinrichtungen können, unabhängig von einer Verkabelung, frei konfiguriert und damit optimal genutzt werden. Vor Beginn eines Produktionsvorganges wird von einer Bedienperson die Schalteinrichtung so gesetzt, daß die für den vorgesehenen Produktionsvorgang benötigten Verarbeitungseinrichtungen zur Verfügung stehen. In der Operationseinheit vorhandene, aber für diesen Produktionsvorgang nicht benötigte Verarbeitungseinrichtungen können dann für andere Produktionen konfiguriert und so gleichzeitig eingesetzt werden. Neben den genannten Vorteilen ergibt sich ein kleinerer Raumbedarf, ein erheblich verringerter Aufwand für die Verkabelung und insbesondere eine Möglichkeit, Änderungswünsche schnell und problemlos durchzuführen. Auf Kundenwünsche kann der Hersteller eines derart aufgebauten Fernseh-Übertragungswagens sehr viel schneller reagieren und maßgeschneiderte Angebote unterbreiten. Außerdem entfällt eine umständliche Planung für die Unterbringung der einzelnen Operationsbauteile und für die Leitungsführung. Ferner entfallen damit im wesentlichen die bisher üblichen Probleme bei der Wärmeableitung bzw. Kühlung. Insgesamt ergibt sich ein flexibles Steuerungssystem mit einem frei konfigurierbaren Signalrouting. Ein Kunde könnte die Art und Anzahl der Einzelgeräte in der Operationseinheit, d.h. z.B. das komplette System mit Mischer und System-Peripherie, auch selbst bestimmen und zusammenstellen, ohne daß damit ein erheblicher Aufwand in der Planung und Ausführung einhergeht.

In Ausgestaltung der Erfindung ist vorgesehen, daß die Schalteinrichtung mit Hilfe einer Steuerungs-Software steuerbar ist. Eine derartige Ausbildung der steuerbaren Schalteinrichtung ermöglicht eine große Flexibilität, da sehr schnell und ohne großen Aufwand die jeweils benötigten Bildsignal-Verarbeitungseinrichtungen ausgewählt und miteinander verschaltet werden können.

In weiterer Ausgestaltung der Erfindung ist vorgesehen, daß die Ein- und Ausgänge der Bildsignal-Verarbeitungseinrichtungen an Ein- und Ausgänge einer Rechner-gesteuerten Kreuzschiene angeschlossen sind. Ein derartiger Aufbau ermöglicht eine übersichtliche Verbindung zwischen den Bildsignal-Verarbeitungseinrichtungen und der Schalteinrichtung.

In weiterer Ausgestaltung der Erfindung ist vorgesehen, daß die Bildsignal-Verarbeitungseinrichtungen in einer zentral im Studio oder im Fernseh-Übertragungswagen angeordneten Produktionsbox untergebracht sind. Eine derartige Bauweise ermöglicht einen kompakten Aufbau. Die Produktionsbox kann mit allen bei derartigen Anordnungen zur Produktion eines Fernsehbeitrages benötigten üblichen Geräten bestückt werden, ferner können freie Plätze vorgesehen sein, um die Anordnung später durch derzeit noch nicht bekannte Bausteine zu erweitern.

Ein einfacher Aufbau der Produktionsbox und eine einfache Möglichkeit zu deren Verschaltung mit der Schalteinrichtung ergibt sich dadurch, daß die Bildsignal-Verarbeitungseinrichtungen in Form von in die Produktionsbox einschiebbaren, in sich fest verdrahteten Einschubeinheiten ausgebildet und über Einschubkontakte oder Softwaremodule mit der steuerbaren Schalteinheit verbindbar sind.

Eine vorteilhafte Ausgestaltung der Erfindung besteht darin, daß die durch die Schalteinheit zu einem bestimmten Zweck ausgewählten Bildsignal-Verarbeitungseinrichtungen durch ein oder mehrere Bedienungspulte steuerbar sind, die frei konfigurierbare Bedienoberflächen besitzen. Damit entfällt das bei den bisher bekannten Anordnungen vorgesehene, oft unübersichtlich große Bedienpult mit der Vielzahl an Knöpfen und Schaltern. Die nunmehr vorgesehenen, frei konfigurierbaren Bedienoberflächen der Bedienpulte können z.B. gezielt bestimmten Gruppen von Verarbeitungseinrichtungen zugeordnet und angepaßt werden.

In der Zeichnung ist in den Fig. 1 bis 4 ein Ausführungsbeispiel des Gegenstandes gemäß der Erfindung schematisch dargestellt.
Fig. 1 zeigt ein schematisches Blockschaltbild für den Gesamtaufbau einer Anordnung gemäß der Erfindung,
Fig. 2 zeigt eine perspektivische schematische Ansicht einer als Operationsbox ausgebildeten Anordnung mit einschiebbaren Baueinheiten,
Fig. 3 zeigt in perspektivischer Darstellung drei Schaltpulte, und
Fig. 4 zeigt eine Rechner-gesteuerte Kreuzschiene.

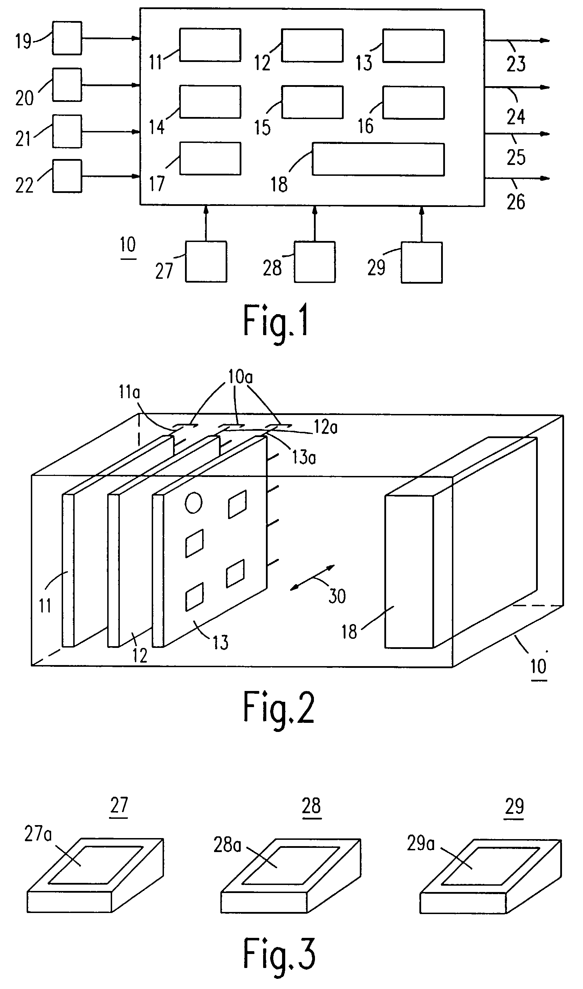

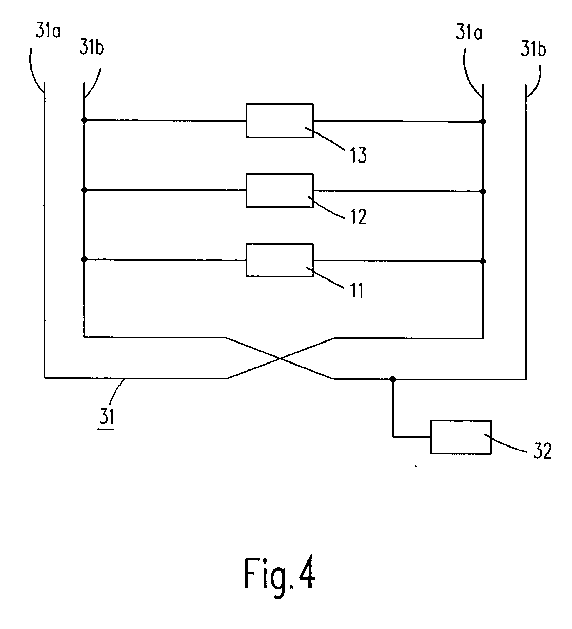

Fig. 1 zeigt eine zentrale Operationseinheit 10 mit im Innern angeordneten Signal-Verarbeitungseinrichtungen 11 bis 17. Im vorliegenden Ausführungsbeispiel enthält die Produktionseinheit 10 z.B. Mischerstufen 11, Keyer 12, digitale Videoeffektgeräte 13, Schriftgeneratoren 14, Videospeicher 15 (z.B. Festplatten), Synchronizer 16, ein freies Gehäuse 17 mit noch nicht bestückten Bauelementen und eine steuerbare Schalteinrichtung 18 für die oben genannten Bildsignal-Verarbeitungseinrichtungen 11 bis 17. Als Bildsignalquellen dienen hier zwei Kameras 19 und 20 und zwei Magnetband-Aufzeichnungsgeräte 21 und 22. Mit 23 und 24 sind zwei Signalausgänge zu Antennen und mit 25 und 26 zwei Signalausgänge zu zwei Monitoren bezeichnet. An die Produktionseinheit 10 sind ferner drei in Fig. 4 dargestellte Bedienpulte 27, 28 und 29 angeschlossen, die jeweils eine in Fig. 4 erkennbare, frei konfigurierbare Bedienoberfläche 27a aufweisen.

In der perspektivischen Darstellung gemäß Fig. 2 ist die Produktionseinheit 10 als kastenförmige Produktionsbox ausgebildet, in welche die als Einschubeinheiten ausgebildeten Bildsignal-Verarbeitungseinrichtungen 11 bis 17 in Richtung 30 einschiebbar eingebracht werden können. Fig. 2 zeigt stellvertretend drei derartige Einschubeinheiten 11, 12 und 13. Die Einschubeinheiten 11 bis 13 besitzen an ihrer Rückseite Einschubkontakte 11a, 12a, 13a, die beim Einschleben mit festen Gegenkontakten 10a in Verbindung treten und dadurch mit der steuerbaren Schalteinrichtung 18 kontaktiert werden. Auch die steuerbare Schalteinrichtung 18 kann als Einschubeinheit ausgebildet sein.

Fig. 3 zeigt als Schaltbild eine Rechner-gesteuerte Kreuzschiene 31 mit Eingängen 31a und Ausgängen 31b und mit drei an die Ein- und Ausgänge angeschlossenen Bildsignal-Verarbeitungseinrichtungen 10, 11 und 12. Mit 32 sind Bediengeräte bezeichnet.

## Patentansprüche

1. Anordnung zur Produktion eines Fernsehbeitrages in einem Studio oder einem Übertragungswagen
- mit mindestens einer Bildsignalquelle (19 bis 22),
- mit Einrichtungen (11 bis 17) zur Verarbeitung der Bildsignale und
- mit Ausgängen (23 bis 26) für die bearbeiteten Bildsignale,
dadurch gekennzeichnet,
- daß die einzelnen Bildsignal-Verarbeitungseinrichtungen (11 bis 17) als selbständige Baueinheiten unabhängig voneinander in einer zentralen Operationseinheit (10) zusammengefaßt sind und
- daß die Ein- und Ausgänge der Bildsignal-Verarbeitungseinrichtungen (11 bis 17) mit einer steuerbaren Schalteinrichtung (18) verbunden sind, die eine freie Zuordnung der Bildsignal-Verarbeitungseinrichtungen (11 bis 17) ermöglicht.

2. Anordnung nach Anspruch 1, dadurch gekennzeichnet, daß die Schalteinrichtung (18) mit Hilfe einer Steuerungs-Software steuerbar ist.

3. Anordnung nach Anspruch 1 oder 2, dadurch gekennzeichnet, daß die Ein- und Ausgänge der Bildsignal-Verarbeitungseinrichtungen (11 bis 17) an Ein- und Ausgänge (31a, 31b) einer Rechner-gesteuerten Kreuzschiene (31) angeschlossen sind.

4. Anordnung nach einem der Ansprüche 1 bis 3, dadurch gekennzeichnet, daß die Bildsignal-Verarbeitungseinrichtungen (11 bis 17) und die Schaltanordnung in einer zentral im Studio oder im Übertragungswagen angeordneten Produktionsbox (10) untergebracht sind.

5. Anordnung nach einem der Ansprüche 1 bis 4, dadurch gekennzeichnet, daß die Bildsignal-Verarbeitungseirrichtungen (11 bis 17) in Form von in die Produktionsbox (10) einschiebbaren, in sich fest verdrahteten Einschubeinheiten ausgebildet und über Einschubkontakte (11a, 10a) oder Softwaremodule mit der steuerbaren Schalteinheit (18) verbindbar sind.

6. Anordnung nach einem der Ansprüche 1 bis 5, dadurch gekennzeichnet, daß die durch die steuerbare Schalteinheit (18) zu einem bestimmten Zweck ausgewählten Bildsignal-Verarbeitungseirrichtungen (11 bis 17) durch ein oder mehrere Bedienpulte (27, 28, 29) steuerbar sind, die frei konfigurierbare Bedienoberflächen (27a, 28a, 29a) besitzen.
